# EUROPEAN PATENT SPECIFICATION

(11) **EP 0 552 685 B1**
(45) Date of publication and mention of the grant of the patent: **09.09.1998**
(21) Application number: 93100592.0
(22) Date of filing: 15.01.1993
(51) Int. Cl.: F41G 7/30

(54) **Optical viewing and near infrared tracking system for a portable missile launcher**
Optisches Beobachtungs- und Nahinfrarot-Verfolgungssystem für einen tragbaren Flugkörperwerfer
Système d'observation optique et de poursuite en proche infrarouge pour un lanceur de missile portable

(30) Priority: 21.01.1992 US 823413
(43) Date of publication of application: 28.07.1993
(73) Proprietor: Raytheon Company, El Segundo, California 90245 (US)
(72) Inventor: Carlson, James J., Woodland Hills, California 91367 (US); Noyes, Gary R., Los Angeles, California 90064 (US)
(74) Representative: Grünecker, Kinkeldey, Stockmair & Schwanhäusser Anwaltssozietät

(56) References cited:
- GB-A- 1 405 121
- US-A- 3 974 383
- US-A- 3 992 629
- US-A- 4 038 547
- US-A- 4 441 668

## Description

### BACKGROUND OF THE INVENTION

### 1. Field of the Invention

The present invention relates generally to a missile launcher, and, more particularly, to an optical and infrared TRACKING system according to the preamble of claim 1 for use in such a missile launcher to split the optical information received from a target into visible light portions and near infrared components.

### 2. Description of Related Art

Known portable missile launchers at the present time include both direct viewing capability and near infrared traffic equipment (specifically, direct viewing is utilized during daylight when the target is relatively exposed and not camouflaged). The near infrared tracking system is used to follow a beacon mounted in the rear of the missile with signals generated thereby utilized to redirect the missile, if needed, along such a path as to effect engagement with the target.

Known dual systems of this kind utilize separate visual and near infrared objective lenses with separate optical axes which require periodic in-field adjustments to assure and maintain boresight. These are both inconvenient and time consuming in necessitating the user of the equipment to make adjustments in both systems for realignment purposes to achieve boresight control.

Further relevant prior art is known from the following documents.

US-A-3 974 383 relates to a missile tracking and guidance system comprising an objective lens for receiving both visible and infrared energy directed on a first prism. This prism separates the visible energy from the infrared energy by reflecting the visible energy while transmitting the infrared energy. The visible energy is directed to an eye-piece for a viewer. The prism comprises two prisms having facing surfaces.

US-A-4 038 547 relates to a tracking and sighting instrument including a system for receiving visible light and infrared light from a target having a beamsplitter for separating the visible and IR light by reflecting the visible light, an achromatic lens in the path of the IR light, a further achromatic lens in the path of the visible light and an eye-piece lens.

US-A-4 441 668 relates to an infrared optical aiming and guiding device which comprises a night aiming device having a partially transmitting mirror for filtering the missile beams of a narrow spectral band out of a beam bundle and reflecting the beam to a guiding device, and further having an infrared/visible light image converter emitting visible light rays reflected into an ocular lens of the aiming device for viewing by an operator. Further, a second separate path for daylight conditions is provided.

GB-A-1 405 121 relates to a missile guidance system including an objective lens and a beam splitter for transmitting visual light and for reflecting infrared light emitted by a small source within the system, and an eye-piece for viewing the visual light.

US-A-3 992 629 relates to a telescope cluster having a broad, intermediate and narrow field of view infrared telescopes, broad and narrow field of view visual telescopes and a narrow field of view laser telescope, together with an apparatus for boresighting said telescopes, all of the narrow field of view telescopes having a common objective lens with means for separating the optical pathways. These means for separating the optical pathways are a first dichroic mirror reflecting received infrared radiation and radiation at the frequency of the boresight laser with an aperture extending through said first dichroic mirror, and a second dichroic mirror embedded in a multifaced prism transmitting visual frequency radiation and reflecting the radiation at the frequency of the boresight laser.

It is the object of the invention to provide a compact and smaller optical system as defined in the preamble of claim 1.

This object is solved in such a system by means of the characterizing features of claim 1.

The optical apparatus for the missile launcher includes an objective lens for receiving the entire visual and near infrared light energy emanating from the target, immediate background of the target and missile. The light energy from the objective lens then passes through a Porro prism assembly which acts to direct visual light energy along a first path to an eyepiece and near infrared energy along a second path at approximately a right angle to the first path where it is received by a tracker assembly and monitored. The Porro prism is specially constructed in accordance with this invention to include a multi-layer interference dichroic coating disposed between the two prisms which make up the prism assembly. This coating is of such a nature as to readily permit light energy in the visual range to pass directly through the coating, but at the same time to reflect the near infrared components along the second path bringing them to focus on the tracker assembly.

### DESCRIPTION OF THE DRAWING

In the accompanying drawings:
FIG. 1 is an elevational schematic of the system of the present invention;
FIG. 2 is a side elevational view of a portable launcher with which the present invention is especially advantageously employed; and
FIG. 3 is an enlarged schematic showing the various layers of a multi-layer dichroic beamsplitter for use in this invention.

### DESCRIPTION OF A PREFERRED EMBODIMENT

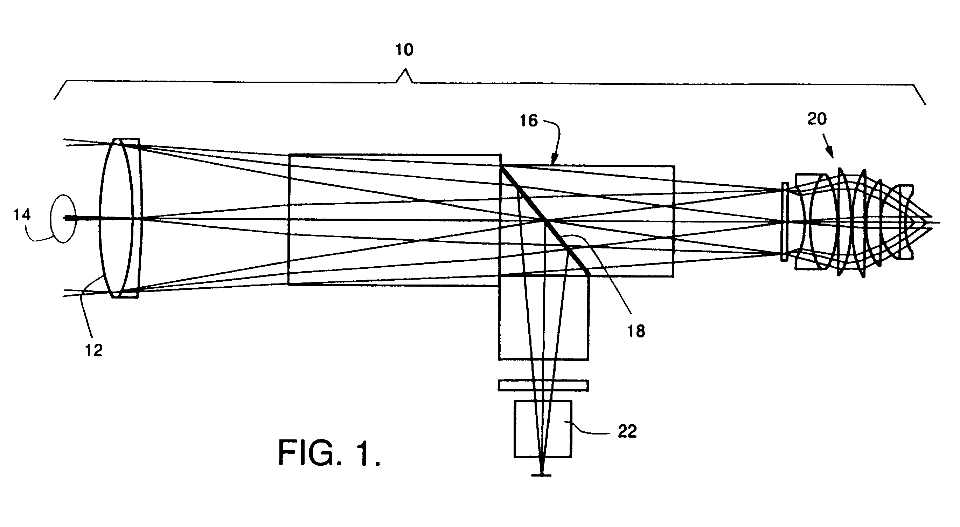

Turning now to the drawing and particularly FIG. 1, the optical system of the present invention is enumerated generally as 10 which in its broadest comprehension is seen to include an objective lens 12 for receiving light energy from an object 14,namely, both visible energy as well as energy in the near infrared.

Light from the objective 12 passes through a Porro prism 16 which is a device having two right-angle prisms assembled together at right angles to one another for inverting and reverting images. For further details of the Porro prism, reference is made to page 13-26 of Military Standardization Handbook, OPTICAL DESIGN MIL-HDBK-141, October 5, 1962. As will be more particularly described, the prism contains a multi-layer coating 18 which permits electromagnetic energy in the visible range to pass therethrough for direct receipt and examination by an eyepiece 20. In addition, the coating 18 redirects impinging near infrared energy along a different path for receipt by near infrared tracking processing equipment 22.

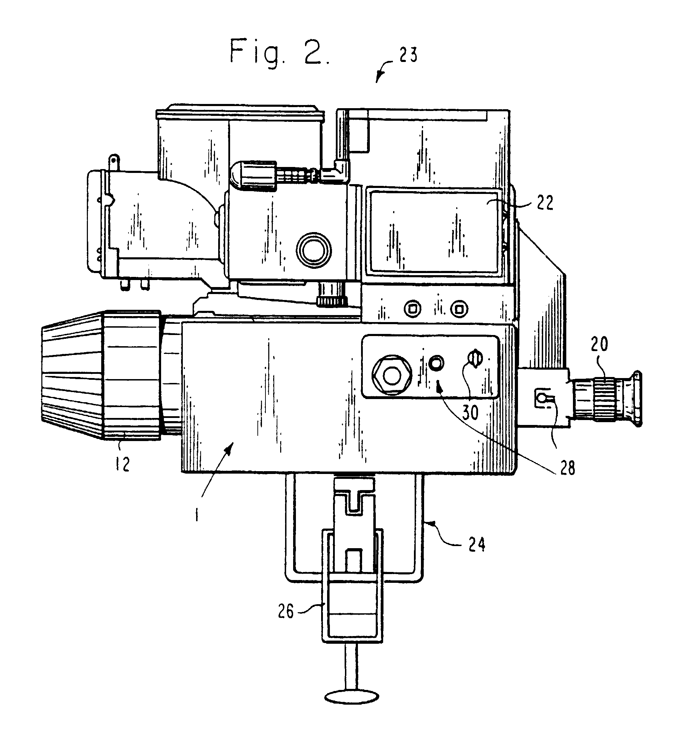

FIG. 2 shows, in a side elevational view, portable apparatus 23 for accomplishing missile launcher target sighting both by a visual method and by infrared sensing. On a common base 24, which may include a carrying handle 26, the electromagnetic energy from a target object is collected by the object lens 12 at the forward end and monitored by the eyepiece 20 at the rear. The near infrared processing equipment 22 is mounted conveniently adjacent to the visible optical system. Auxiliary missile launch controls 28 are mounted immediately adjacent the eyepiece 20 and a hand switch 30 is provided to control a reticle light, for example.

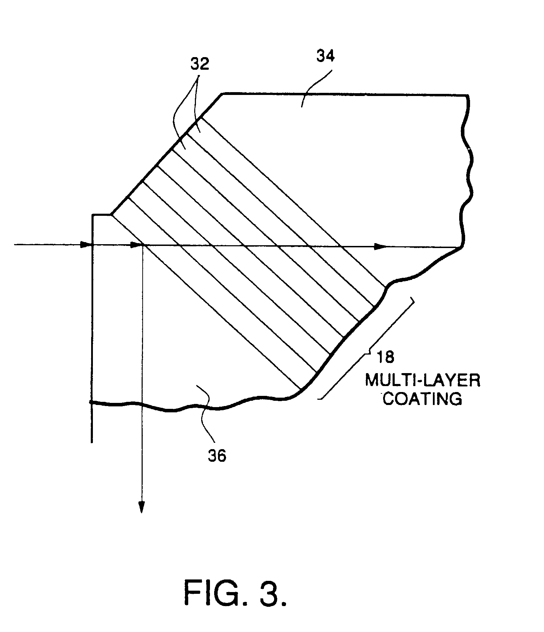

With reference now to FIG. 3 there is shown in enlarged section the assembly of a plurality of thin film layers to form the multi-layer coating 18 for use in the Porro prism to act as a dichroic beamsplitter. More particularly, the coating 18 is composed of a plurality of very thin films 32 deposited on, say, the angular face of one of the prism elements 34. Finally, the second prism element 36 is then abutted against the coating 18 as shown in FIG. 3. This coating 18, which may also be referred to as an "interference coating", serves to spectrally control the light entering the Porro prism passing the near infrared light components through the second prism element 36 and allowing the visible light components to proceed through prism element 34 on toward the eyepiece.

The coating 18 can be a dichroic dielectric coating constructed of an MgF₂ layer followed by a three-layer stack repeated six times where the three-layer stack consists of two MgF₂ layers sandwiched about a ZnS layer. The initial MgF₂ layer preferably has a thickness of 0.78 of a wavelength, the three-layer stack MgF₂ layers are each 0.5 wavelength thick, and each ZnS layer has a thickness of 1.0 wavelength. For present purposes, the wavelength will preferably be about 0.75 µm (microns).

Through the practice of the present invention both near infrared light energy and visual light energy emanating from a target object are received through a single objective lens. Visual examination is made through an eyepiece, and, by the action of the beamsplitter in the Porro prism, the infrared components are shunted off the optical viewing axis for sensing and processing. In this way, the difficulties encountered in use of the present known systems requiring separate adjustments and manipulations for near infrared tracking and for visual examination are avoided.

## Claims

1. An optical system in a portable missile launcher for receiving visual and near infrared light energy from a target and missile beacon, comprising:
an objective lens (12);
an eyepiece (20) located on a common optical axis with the objective lens (12);
a prism assembly (16) located on said optical axis between the objective lens (12) and eyepiece (20), said prism assembly (16) including first and second prisms (34, 36) with facing surfaces,
**characterized by**
an interference coating (18) located between the prism facing surfaces allowing visual light energy to be directed along the optical axis to the eyepiece (20) and the near infrared light along a path off angle to the optical axis, said interference coating (18) being constructed of a plurality of dielectric layers (32) laid down on one of the prism facing surfaces in a stack, with an outer layer of the stack constructed of MgF₂ having a 0.78 wavelength thickness, and the remaining layers in the stack being formed from a plurality of three-layer elements, each element including a pair of 0.5 wavelength layers sandwiched about a 1.0 wavelength layer of ZnS.

2. An optical system as in claim 1, in which the wavelength is about 750 nm.

## Patentansprüche

1. Optisches System in einem tragbaren Flugkörperwerfer zum Empfang von Lichtenergie im sichtbaren und nahen Infrarot von einem Ziel- und Flugkörperleitsignalgeber, mit:
einer Objektivlinse (12);
einem Okular (20), das auf einer gemeinsamen optischen Achse mit der Objektivlinse (12) liegt;
einer Prismenanordnung (16), die auf der optischen Achse zwischen der Objektivlinse (12) und dem Okular (20) liegt, wobei die Prismenanordnung (16) erste und zweite Prismen (34, 36) mit einander zugewandten Oberflächen enthält,
**gekennzeichnet durch**
eine Interferenzbeschichtung (18), die zwischen den zugewandten Prismenoberflächen liegt, die ermöglicht, daß sichtbare Lichtenergie entlang der optischen Achse zu dem Okular (20) gerichtet wird und Licht im nahen Infraroten entlang eines Pfads, der zu der optischen Achse winkelversetzt ist, gerichtet wird, wobei die Interferenzbeschichtung (18) aus einer Vielzahl von dielektrischen Schichten (32) aufgebaut ist, die auf einer der einander zugewandten Prismenoberflächen in einem Stapel niedergelegt sind, wobei eine äußere Schicht des Stapels aus MgF₂ mit einer Dicke von 0,78 Wellenlängen aufgebaut ist, und die verbleibenden Schichten in dem Stapel aus einer Vielzahl von dreischichtigen Elementen gebildet sind, wobei jedes Element ein Paar von Schichten mit 0,5 Wellenlängen, die um eine Schicht aus ZnS mit 1,0 Wellenlängen herum angeordnet sind, enthält.

2. Ein optisches System gemäß Anspruch 1, wobei die Wellenlänge ungefähr 750 nm beträgt.

## Revendications

1. Système optique dans un lanceur de missile portatif pour recevoir de l'énergie lumineuse visible et infrarouge proche, d'une cible et d'une balise de missile, comprenant :
un objectif (12) ;
un oculaire (20) situé sur un axe optique commun avec l'objectif (12) ;
un ensemble à prismes (16) situé sur ledit axe optique entre l'objectif (12) et l'oculaire (20), ledit ensemble à prismes (16) comportant des premier et second prismes (34, 36) ayant des surfaces en vis-à-vis,
caractérisé par
un revêtement d'interférence (18) situé entre les surfaces de prisme en vis-à-vis permettant à l'énergie lumineuse visible d'être dirigée le long de l'axe optique vers l'oculaire (20) et à la lumière infrarouge proche de se propager le long d'un trajet angulairement écarté de l'axe optique, ledit revêtement d'interférence (18) étant constitué d'une pluralité de couches diélectriques (32) déposées sur l'une des surfaces de prisme en vis-à-vis de façon empilée, une couche extérieure de la pile étant constituée de MgF₂ ayant une épaisseur de 0,78 longueur d'onde, et les couches restantes dans la pile étant formées d'une pluralité d'éléments à trois couches, chaque élément comportant une paire de couches de 0,5 longueur d'onde prenant en sandwich une couche de 1,0 longueur d'onde en ZnS.

2. Système optique selon la revendication 1, dans lequel la longueur d'onde est d'environ 750 nm.
